# EUROPEAN PATENT SPECIFICATION

(11) **EP 1 662 502 B1**
(45) Date of publication and mention of the grant of the patent: **18.02.2009**
(21) Application number: 05025474.7
(22) Date of filing: 22.11.2005
(51) Int. Cl.: G11B 17/04

(54) **Disk drive having mechanism for preventing tray from rolling**
Plattenlaufwerk mit einer Vorrichtung, die ein Schlingern der Ablage verhindert
Lecteur de disque pourvu d'un mécanisme pour empêcher le roulement du plateau

(30) Priority: 29.11.2004 JP 2004343720
(43) Date of publication of application: 31.05.2006
(73) Proprietor: ORION ELECTRIC CO., Ltd., Fukui 915-8555 (JP)
(72) Inventor: Nishide, Masahiko, Echizen-shi Fukui, 915-8555 (JP); Makino, Takeshi, Echizen-shi Fukui, 915-8555 (JP)
(74) Representative: Vossius & Partner

(56) References cited:
- EP-A2- 0 917 140
- EP-A2- 1 174 873
- US-A- 5 682 371

## Description

The present invention relates to a disk drive having a function of preventing a tray from rolling in an open state in which the tray is carried to a disk exchanging position.

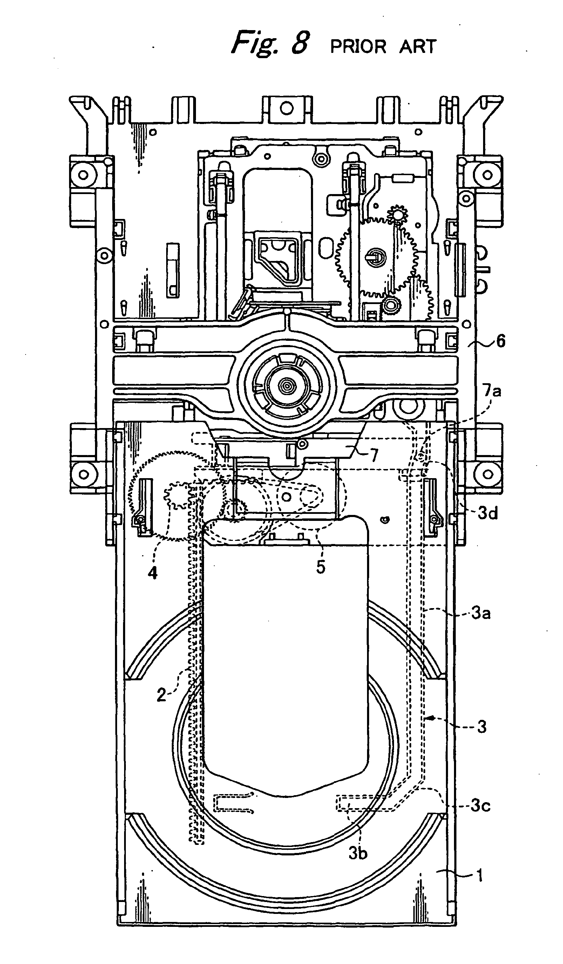

In a disk drive having a tray capable of freely reciprocating between a disk exchanging position and a disk reproducing position, the tray is reciprocated in the longitudinal direction being supported by guide rails provided on a chassis. As shown in Fig. 8, a pinion 4 driven and rotated by a motor 5 is meshed with a rack 2 extended in the longitudinal direction on one side of the lower face of a tray 1. When the pinion 4 is rotated, the rack 2 and the tray 1 are reciprocated in the longitudinal direction.

On the other side of the lower face of the tray 1, a cam groove 3, the shape of which is substantially L-shaped, is provided. A cam rod boss 7a, which protrudes from a rack loading 7 being capable of freely moving on a chassis 6 in the lateral direction, is slidably engaged with the cam groove 3. The cam groove 3 includes: a longitudinal cam groove 3a extending in parallel with the rack 2; a lateral cam groove 3b arranged perpendicular to the rack 2; and a corner cam groove 3c arranged between the longitudinal cam groove 3a and the lateral cam groove 3b. A curved portion 3d is formed at the rear of the longitudinal cam groove 3a, which extends being formed into a substantial trapezoid.

In the case where the tray 1 proceeds toward the disk exchanging position, the tray 1 is stopped when the cam rod boss 7a slidably engaged with the longitudinal cam groove 3a comes to the curved portion 3d. In the case where the tray 1 is carried in and retracted, the tray 1 is stopped when the cam rod boss 7a slidably engaged with the longitudinal cam groove 3a comes to the corner cam groove 3c. That is, when the cam rod boss 7a is moved along the cam groove 3, the rack loading 7 as the main body is moved in the lateral direction. According to this movement of the rack loading 7, a switch not shown is turned on and off. Due to the foregoing, the motor for driving the tray 1 is started and/or stopped.

However, the tray 1 located at the disk exchanging position is not stable because only the rear end portion of the tray 1 is supported by the guide rails. Especially, immediately before the motor 5 is stopped, rolling is generated in the tray 1. That is, the rack 2 meshed with the pinion 4 is given a force in the feeding direction. On the other hand, when the cam rod boss 7a engaged with the longitudinal cam groove 3a comes to the curved portion 3d, a slide friction force acts in a direction opposite to the feeding direction. As a result, a counterclockwise moment is generated in the tray 1. Therefore, the tray 1 is changed in the direction.

JP-A-2003-6971 discloses a disk device including a tray holding mechanism composed of an engaging groove provided at the rear on the lower face side of the tray and a pair of engagement pins protruding from a right end of the second slider so that the rattling of the tray can be reduced when the tray is moved to the disk exchanging position. The engagement pin is set so that the clearance between the outer diameter and the width of the engagement groove can be small. Accordingly, the engagement can be accomplished in a state in which rattling is seldom caused. Therefore, a pair of engagement pins is moved to the right together with the tray moving forward. When the tray is moved to the disk exchanging position, the engagement pins are engaged with the engagement groove, so that the occurrence of rattling can be reduced. That is, the tray is prevented from rolling at three points of two engagement pins and one pin.

When not only the first and the second guide groove are provided on the tray of this disk drive but also the engagement groove is redundantly provided at the rear end portion of the tray, the occurrence of rolling and rattling can be suppressed. However, since the engagement groove composed of two ribs is provided, a space on the lower side of the tray becomes small. As a result, the space to arrange parts is limited, and the thickness of the disk drive is increased.

EP-A-0 917 140 discloses a disc drive according to the preamble of claim 1.

Therefore, it is an object of the present invention to provide a disk drive that rolling of a tray can be suppressed by a simple mechanism when the tray is carried out, and the thickness of the disk drive can be reduced by removing a warp of the tray.

The present invention provides a disk drive comprising: a tray having a rack arranged on lower face for loading and carrying in and out a disk; a rack loading capable of sliding in a direction perpendicular to the tray carrying direction; and a pinion meshed with the rack being driven by a motor, wherein the tray is provided on the lower face a substantially L-shaped first cam groove formed on the opposite side to the rack side, and a curved second cam groove formed at a rear end portion of the tray in the neighborhood of the rack; and the rack loading is provided with a first cam rod boss protruding therefrom and slidably engaging with the first cam groove, and a second cam rod boss protruding therefrom and slidably engaging with the second cam groove; whereby preventing the tray from rolling.

The first cam groove may include a longitudinal cam groove extending in parallel with the rack; a lateral cam groove arranged perpendicular to the rack; and a corner cam groove arranged between the longitudinal cam groove and the lateral cam groove; the cam grooves being respectively composed of two ribs extending in parallel with each other.

Only the longitudinal cam groove of the first cam groove may be composed of only one rib. Even in the process of carrying out the tray along the longitudinal cam groove, the tray is supported by the guide rails provided on the chassis. Therefore, the tray can be smoothly carried out without rolling.

As described above, on the tray of the disk drive of the present invention, the rack is provided on one side of the bottom face, the substantially L-shaped first cam groove is provided on the opposite side, and the second cam groove is provided at the rear end portion in the neighborhood of the rack in such a manner that the positions of the rack, the first cam groove and the second cam groove are well balanced. Accordingly, the mechanical strength of the entire tray is made uniform, and it is possible to prevent the generation of warp. Therefore, the tray can be more smoothly slid in the carrying process.

The first cam groove does not exist at the rear end portion of the tray. Instead of that, the second cam groove exists on the rack side and extends to the rear end of the tray. Accordingly, the second cam groove and the first cam groove are not completely overlapped with each other. Therefore, the restriction imposed on the parts arranged in the lower portion of the tray can be relieved. At the same time, the thickness of the disk drive can be reduced. On the other hand, when the second cam groove is located on the side of the rack which gives a force for carrying the tray, the moment to change the direction of the tray by a slide friction of the second cam rod boss engaged with the curved second cam groove can be reduced. Therefore, the tray can be carried out to the disk exchange direction without rolling of the tray.
Fig. 1 is a plan view showing a disk drive of an embodiment of the present invention in which the tray is located at the disk exchanging position;
Fig. 2 is a plan view showing the disk drive in the state in which the tray is accommodated;
Fig. 3A is a sectional side view showing a state in which the tray is accommodated;
Fig. 3B is a sectional side view showing a state in which the tray is located at the disk exchanging position;
Fig 4 is a plan view showing only the tray;
Fig. 5A is a longitudinal sectional view showing a relation between the rack loading and the tray put into a state of accommodation;
Fig. 5B is a longitudinal sectional view showing a relation between the rack loading and the tray located at a state of exchanging the disk;
Fig. 6 is a plan view showing only the tray of another embodiment;
Fig. 7 is a plan view showing a state in which the tray is accommodated; and
Fig. 8 is a plan view showing a conventional disk drive in which the tray is located at the disk exchanging position.

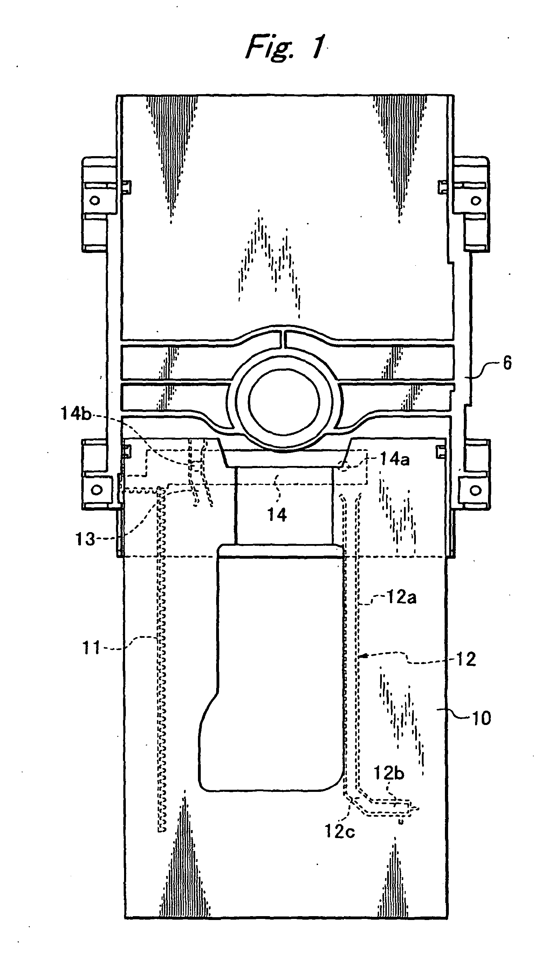

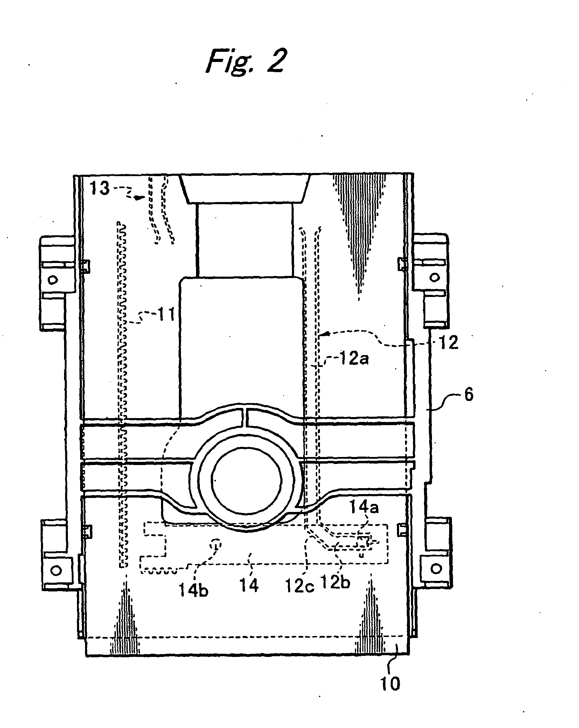

Figs. 1 to 5B show a disk drive of the first embodiment of the present invention. Portions of this disk drive except for a tray 10 and a rack loading 14 are essentially the same as those of the related art shown in Fig. 8. Therefore, identical reference numerals are used to indicate the identical parts in these drawings, and the detail explanations on the drawings are omitted here. As shown in Figs. 1 and 2, a rack 11 extending in the longitudinal direction is provided on one side on the lower face of the tray 10. On the other side on the lower face of the tray 10, a substantially L-shaped first cam groove 12 is provided. In the neighborhood at the rear of the rack 11, a second cam groove 13 is provided. The rack 11, the first cam groove 12 and the second cam groove 13 are formed of synthetic resin by means of integral molding. The first cam groove 12 includes: a longitudinal cam groove 12a extending in parallel with the rack 11; a lateral cam groove 12b arranged perpendicular to rack 11; and a corner cam groove 12c formed between the longitudinal cam groove 12a and the lateral cam groove 12b.

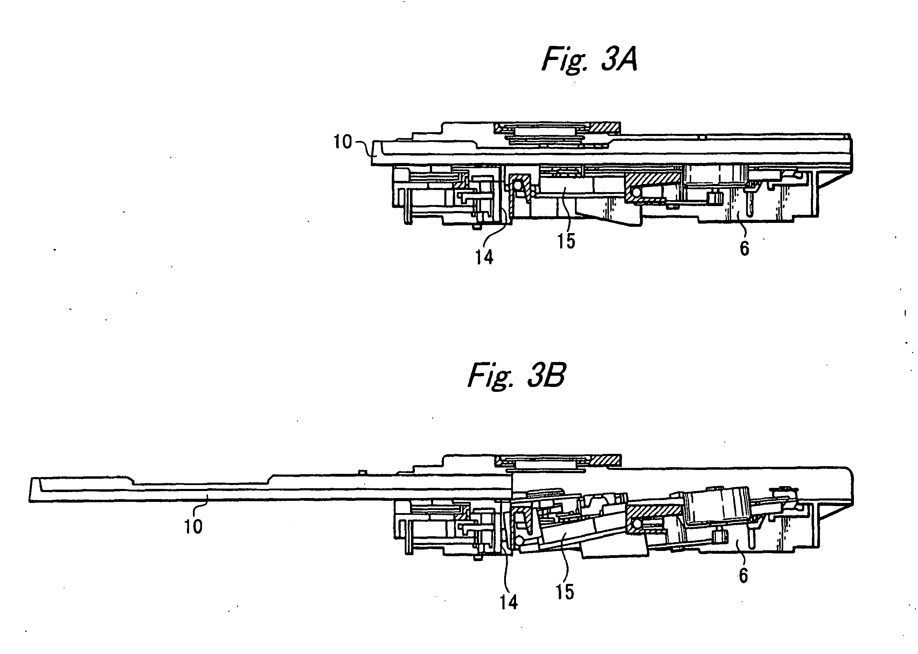

In order to move a traverse unit 15 upward and downward, on the front side of the traverse unit 15 on the chassis 6, the rack loading 14 is arranged being capable of freely sliding in the lateral direction (see Figs. 3A and 3B). A first cam rod boss 14a and a second cam rod boss 14b are protruded on the rack loading 14. The first cam rod boss 14a is engaged with the first cam groove 12, and the second cam rod boss 14b is engaged with the second cam groove 13.

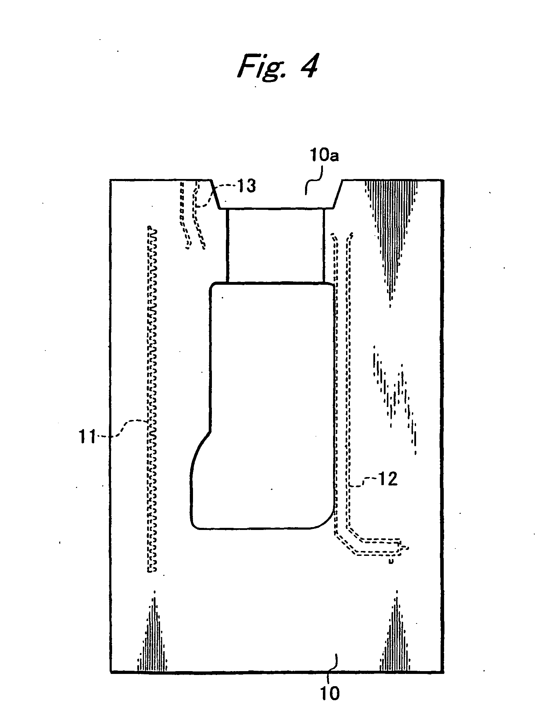

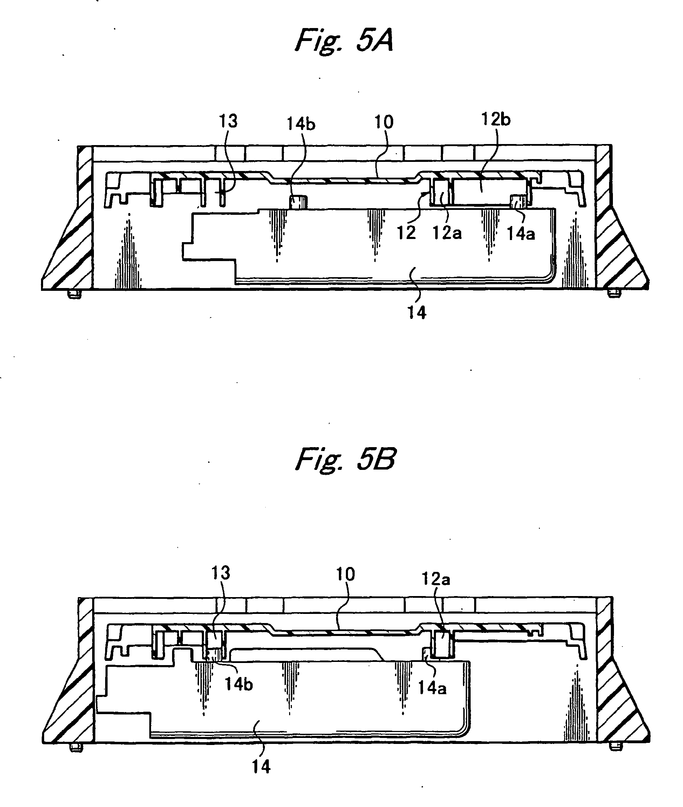

As a single body of the tray 10 is shown in Fig. 4, the rack 11 is provided on one side of the tray 10, and the first cam groove 12 is provided on the other side. Further, the second cam groove 13 is provided on the rack 11 side. Therefore, the rack 11, the first cam groove 12 and the second cam groove 13 are arranged being well balanced without being biased to one side. A recess portion 10a is formed at the center of the rear end portion, which is cut out into a trapezoidal shape. As shown in Figs. 5A and 5B, the first cam groove 12 and the second cam groove 13 are composed in such a manner that two ribs are arranged in parallel with each other on the bottom face of the tray 10. Therefore, the tray 10 can be reinforced by these cam grooves 12, 13. Further, since the rack 11 is protruded from the bottom face of the tray 10, it also functions as a reinforcing member of the tray 10. Since the rack 11, the first cam 12 and the second cam 13 are arranged on the entire tray being well balanced, the mechanical strength of the tray 10 can be made uniform and the generation of warp can be prevented after the tray has been formed by molding.

Since the tray 10 is not warped as described above, the tray can be smoothly slid and carried. The rear end of the first cam groove 12 and the front end of the second cam groove 13 are arranged being overlapped with each other. Further, the shape the cam groove 13 is not straight but curved. That is, a positional relation between the first cam groove 12 and the second cam groove 13 is set as follows. While the tray 10 is being carried out, before the rear end of the first cam groove 12 is separated from the first cam rod boss 14a, the front end of the second cam groove 13 is engaged with the second cam rod boss 14b.

Next, operation of the tray 10 composed as described above will be explained below. When the pinion 4 is rotated by a motor 5 at a state that the tray 10 is being carried in the disk drive as shown in Figs. 2, 3A and 5B, first, the rack loading 14 is moved to the left so that the traverse unit 15 can be lowered. At the same time, the first cam rod boss 14a engaged with the lateral cam groove 12b of the first cam groove 12 is moved to the left. Next, the tray 10 is slid forward by the rotation of the pinion 4 engaged with the rack 11. The longitudinal cam groove 12a is moved while it is being engaged with the first cam rod boss 14a. At the rear end of the longitudinal cam groove 12a, the first cam rod boss 14a is disengaged from the first cam groove 12. At the same time, the second cam rod boss 14b is engaged with the second cam groove 13.

When the second cam rod boss 14b is moved along the curved second cam groove 13, the rack loading 14 is moved to the left and turns on a switch (not shown) just before the tray 10 reaches the disk exchanging position. Therefore, the drive motor 5 is controlled and the tray 10 is stopped at the disk exchanging position shown in Figs. 1, 3B and 5B. In this case, the rack 11 is given a force by the rotation of the pinion 4 so that the rack 11 can be sent out. When the second cam rod boss 14b enters the curved second cam groove 13, the tray 10 is given a force in the opposite direction (to the rear) by the slide friction generated between the second cam rod boss 14b and the second cam groove 13.

However, since the second cam groove 13 is provided on the rack 11 side, the thus generated moment is low so that the direction of the tray 10 cannot be changed. In the case of the conventional tray 1 shown in Fig. 8 in which a distance between the rack 2 and the cam groove 3 is long, even when the slide friction force between the cam rod boss 7a and the cam groove 3 is the same, the generated moment is increased and turned into a force to change the direction of the tray.

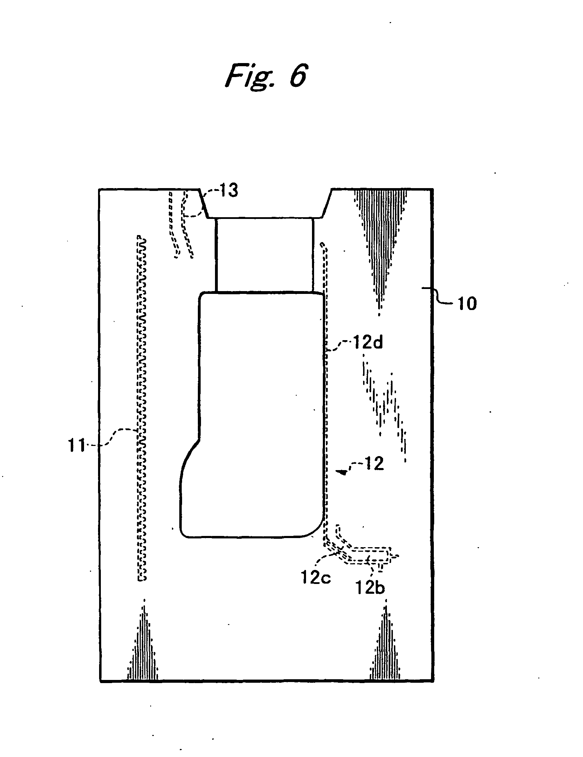

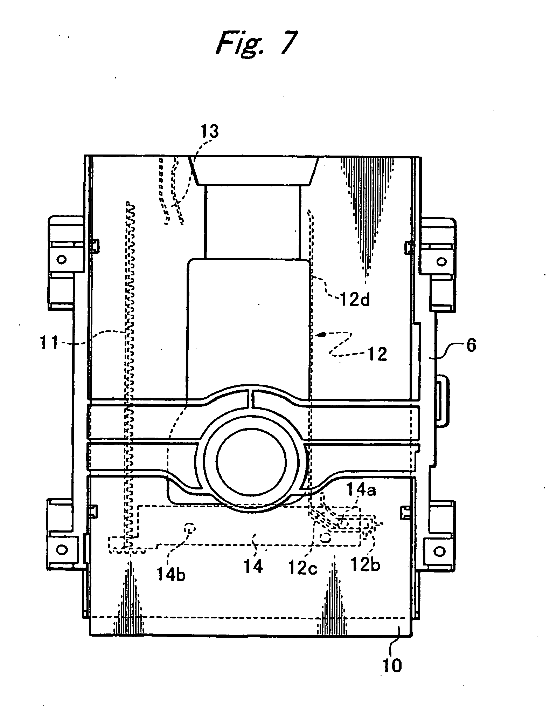

Figs. 6 and 7 show another embodiment of the present invention. In this embodiment, the shape of the first cam groove 12 provided on the lower face of the tray 10 is different from that of the try 10 shown in Fig. 4. That is, instead of the longitudinal cam groove 12a, the longitudinal cam rib 12d is formed only by the inside rib. However, the corner cam groove 12c and the lateral cam groove 12b are the same as those of the tray 10 shown in Fig. 4. Due to this structure, the tray 10 is slid straight being restricted by the guide provided on the chassis 6, without causing a displacement of the rack loading 14. Therefore, even when the longitudinal cam groove 12a is abolished, the rack loading 14 can be regulated.

## Claims

1. A disk drive comprising: a tray (10) having a rack (11) arranged on lower face thereof for loading and carrying in and out a disk; a rack loading (14) capable of sliding in a direction perpendicular to the tray carrying direction; and a pinion (4) meshed with the rack being driven by a motor (5), wherein
the tray (10) is provided on the lower face with a substantially L-shaped first cam groove (12) formed on the opposite side to the rack (11) sides; and
the rack loading (14) is provided with a first cam rod boss (14a) protruding therefrom and slidably engaging with the first cam groove (12),
**characterized by**:
a curved second cam groove (13) formed at a rear end portion of the tray in the neighborhood of the rack (11); and
a second cam rod boss (14b) protruding therefrom and slidably engaging with the second cam groove (13);
whereby preventing the tray (10) from rolling.

2. A disk drive according to claim 1, wherein the first cam groove (12) includes a longitudinal cam groove (12a) extending in parallel with the rack (11); a lateral cam groove (12b) arranged perpendicular to the rack; and a corner cam groove (12c) arranged between the longitudinal cam groove and the lateral cam groove; the cam grooves (12a, 12b and 12c) being respectively composed of two ribs extending in parallel with each other.

3. A disk drive according to claim 1 or 2, wherein only the longitudinal cam groove (12a) of the first cam groove (12) is composed of only one rib.

## Patentansprüche

1. Plattenlaufwerk mit: einer Ablage (10) mit einer Zahnstange (11), die sich auf einer unteren Fläche davon befindet, zum Laden und Ein- und Ausfahren einer Platte; einer Schublade (14), die in einer Richtung senkrecht zur Ablage-Verfahrbewegung gleiten kann; und einem Ritzel (4), das mit der Zahnstange im Eingriff steht und von einem Motor (5) angetrieben wird, wobei
die Ablage (10) auf der unteren Fläche eine im Wesentlichen L-förmige erste Nockennut (12) auf der zur Zahnstange (11) entgegengesetzten Seite aufweist; und
die Schublade (14) einen davon vorstehenden ersten Nockenwellen-Ansatz (14a) aufweist, der gleitend mit der ersten Nockennut (12) im Eingriff steht, **gekennzeichnet durch**:
eine gekrümmte zweite Nockennut (13), die am hinteren Endabschnitt der Ablage in der Nähe der Zahnstange (11) ausgebildet ist; und
einen davon vorstehenden zweiten Nockenwellen-Ansatz (14b), der gleitend mit der zweiten Nockennut (13) im Eingriff steht,
wodurch ein Schlingern der Ablage (10) verhindert wird.

2. Plattenlaufwerk nach Anspruch 1, wobei die erste Nockennut (12) eine längslaufende Nockennut (12a), die sich parallel zur Zahnstange (11) erstreckt, eine querlaufende Nockennut (12b), die senkrecht zur Zahnstange angeordnet ist, und eine Eck-Nockennut (12c) aufweist, die zwischen der längslaufenden Nockennut und der querlaufenden Nockennut angeordnet ist, wobei die Nockennuten (12a, 12b, und 12c) jeweils aus zwei zueinander parallelen Rippen gebildet sind.

3. Plattenlaufwerk nach Anspruch 1 oder 2, wobei nur die längslaufende Nockennut (12a) der ersten Nockennut (12) nur eine Rippe aufweist.

## Revendications

1. Lecteur de disque comprenant : un plateau (10) avec une crémaillère (11) disposée sur une face inférieure de celui-ci pour charger et porter un disque à l'intérieur et à l'extérieur ; un verrou à crémaillère (14) en mesure de coulisser dans une direction perpendiculaire à la direction de transport du plateau ; et un pignon (4) engrené avec la crémaillère et entraîné par un moteur (5), dans lequel
le plateau (10) est pourvu sur la face inférieure d'un premier chemin (12) de came sensiblement en forme de L formé du côté opposé au côté de la crémaillère (11) ; et
le verrou à crémaillère (14) est muni d'une première protubérance (14a) de chemin de came faisant saillie de celui-ci et s'engageant de manière coulissante avec le premier chemin de came (12),
**caractérisé par** :
un deuxième chemin de came (13) incurvé formé au niveau d'une portion d'extrémité arrière du plateau au voisinage de la crémaillère (11) ; et
une deuxième protubérance (14b) de chemin de came faisant saillie dudit verrou et s'engageant de manière coulissante avec le deuxième chemin de came (13) ;
moyennant quoi le roulis du plateau (10) est supprimé.

2. Lecteur de disque selon la revendication 1, dans lequel le premier chemin de came (12) comprend un chemin de came longitudinal (12a) s'étendant parallèlement à la crémaillère (11) ; un chemin de came latéral (12b) disposé perpendiculairement à la crémaillère ; et un chemin de came de coin (12c) disposé entre le chemin de came longitudinal et le chemin de came latéral ; les chemins de came (12a, 12b et 12c) étant respectivement composés de deux nervures s'étendant parallèlement l'une à l'autre.

3. Lecteur de disque selon la revendication 1 ou 2, dans lequel le chemin de came longitudinal (12a) du premier chemin de came (12) est composé d'une unique nervure.
